# EUROPÄISCHE PATENTSCHRIFT

(11) **EP 0 616 986 B1**
(45) Veröffentlichungstag und Bekanntmachung des Hinweises auf die Patenterteilung: **23.12.1998**
(21) Anmeldenummer: 93104830.0
(22) Anmeldetag: 24.03.1993
(51) Int. Cl.: C04B 28/02

(54) **Bindemittel und Verfahrenstechnik zur Herstellung von Spritzbeton mit minimierten Umwelteinflüssen**
Binder and process of manufacturing sprayable concrete causing minimum environmental problems
Liant et procédé de fabrication de béton projeté à effets réduits sur l'environnement

(43) Veröffentlichungstag der Anmeldung: 28.09.1994
(73) Patentinhaber: Lukas, Walter, Prof. Dr., A-6080 Igls (AT)
(72) Erfinder: Lukas, Walter, Prof. Dr., A-6080 Igls (AT)
(74) Vertreter: Becker, Thomas, Dr., Dipl.-Ing.

(56) Entgegenhaltungen:
- EP-A- 0 519 155
- DE-A- 3 340 681
- DE-A- 3 622 568
- DE-A- 4 027 332
- F.M.LEA 'The Chemistry of Cement and Concrete' 1970 , 3RD EDITION; EDWARD ARNOLD , LONDON,GB
- CHEMICAL ABSTRACTS, vol. 94, no. 24, 15. Juni 1981, Columbus, Ohio, US; abstract no. 196621m; & JP-A-55 049 111 (NISSO MASTER BUILDERS CO.) 10 Dezember 1980
- CHEMICAL ABSTRACTS, vol. 109, no. 14, 30. Oktober 1988, Columbus, Ohio, US; abstract no. 115261x; & JP-A-63 129 052 (TOKUYAMA SODA CO. LTD) 1 Juni 1988

## Beschreibung

Gegenstand der Erfindung ist ein Bindemittel sowie ein Verfahren zur Erzeugung eines umweltgerechten Spritzbetons.

Beim Tunnelvortrieb nach der neuen österreichischen Tunnelbauweise ist der Spritzbeton eine der wichtigsten Stützmaßnahmen. Bei ausreichender Qualität ist es möglich, den Spritzbeton für den endgültigen Ausbau statisch mit heranzuziehen. Der Spritzbeton kann im Naß- oder Trockenspritzverfahren aufgetragen werden. Bei der erstgenannten Methode wird das Material Zement, Zuschlag und Wasser vermengt an die Einbaustelle angeliefert und mit einer speziellen Pumpe (Kolbenpumpe, Schneckenpumpe) gefördert. An der Düse wird zum schnelleren Erstarrungsverhalten ein sogenannter Erstarrungsbeschleuniger (EB-Mittel) zugegeben. Beim Trockenspritzverfahren wird das Zuschlagmaterial mit dem Zement vorgemischt und an der Düse Wasser zugegeben. Ein pulverförmiger Erstarrungsbeschleuniger kann mit der Aufgabe des Zementzuschlagstoffgemisches oder in flüssiger Form gleichzeitig mit dem Wasser an der Düse zugesetzt werden. Die Erstarrungsbeschleuniger enthalten im wesentlichen Alkali-Carbonate, Alkali-Hydroxide und Alkali-Aluminate, die das Abbindeverfahren stark beschleunigen. Da es sich bei diesen chemischen Zusatzmitteln um stark alkalische Substanzen handelt, treten verschiedene Umweltbelastungen auf, nämlich:
- Erstens erfahren die Verarbeiter durch die hohen Alkalikonzentrationen Verätzungen auf der Haut, die bei ungenügender Achtsamkeit zu Schäden führen können, außerdem können über Aerosolbildung die Lungen und Augen der Verarbeiter geschädigt werden.
- Zweitens treten durch die Zugabe am Spritzbeton selbst starke technologische Beeinflussungen auf. Dies ist einerseits durch den hohen Anteil an Alkalikomponenten bedingt, zum anderen dadurch, daß durch das rasche Erstarren der Beton sehr porös hergestellt ist.

Darüber hinaus treten beim Auftrag des Spritzbetons zusätzliche Probleme auf. Das aufgetragene Material prallt teilweise (Rückprall) von der Auftragsfläche zurück. Dies verändert die aufgetragene Mischungszusammensetzung gegenüber der ursprünglichen Ausgangsmischung. Da der Rückprall nicht verwendet werden kann, muß er als Bauschutt aus den Tunnel entfernt und als Sonderabfall deponiert werden (starke Belastung durch hohen Alkali-Gehalt). Er vermehrt die insgesamt notwendige Menge des Ausgangsmaterials und verlängert die Spritzzeit zur Herstellung einer definierten Schichtstärke. Zur Minderung des Rückpralls schlägt die EP 0 519 155 A2 ein spezielles Zusatzmittel vor.

Da der Spritzbeton die äußerste Schicht eines Tunnels bildet, kommt er vielfach mit Wasser in Berührung. Abhängig von der Art und Menge des Bergwassers können die Bestandteile aus dem Spritzbeton herausgelöst werden und das Wasser (z. B. Trinkwasser) gelangt in Drainagen oder in die Umgebung. Für die Auslaugung und die Ausfällung sowie den hohen pH-Wert des abfließenden Wassers sind im wesentlichen die zugegebenen Alkalikomponenten des Spritzbetons verantwortlich. Der Zement gemäß DE 40 27 332 A1 ist sulfathaltig und so eingestellt, daß die Erstarrungszeit nur einige Minuten beträgt.

Die vorliegende Erfindung hat sich zur Aufgabe gestellt, umweltschädigende Einflüsse bisher angewendeter Verfahrenstechniken im Trocken- und Naßspritzverfahren auszuschalten, und insbesondere die negativen Auswirkungen des Erstarrungsbeschleunigers. Der hier beschrittene Weg besteht in zweifacher Hinsicht. Einmal kommt ein spezielles Bindemittel zur Anwendung. Dieses hat die Eigenschaften, ohne Erstarrungsbeschleuniger jene Frühfestigkeiten zu erreichen, die es ermöglichen, das Produkt im Spritzverfahren aufzutragen, um in einem zeitlichen Abstand von 3 bis 5 Stunden einen weiteren Abschlag im Tunnelbau zu ermöglichen. Der zweite Weg der Erfindung besteht darin, daß eine spezielle Misch- und Auftragtechnik verwendet wird, die aus den besonderen Eigenschaften des Bindemittels resultiert.

In verschiedenen Patenten bzw. Veröffentlichungen wurde versucht, diesem Umstand auf anderen Lösungswegen Rechnung zu tragen. So beschäftigt sich die DE-AS 1800103 mit einem Zement, der gips- und anhydritfrei ist. In diesem Patent ist jedoch der Einsatz von Erstarrungsverzögerern zwingend notwendig. Hier werden wasserlösliche Kolloide, insbesondere Methylcellulose zugegeben. Der Ersatz von Gips durch andere Erstarrungsverzögerer wird in diesem Patent vorgeschlagen, um die korrosionsfördernde Wirkung des Gipses auszuschalten. In einem anderen Patent, nämlich US-PS 4,405,372 und den darin zitierten verschiedenen US-Patenten wird zu einem gipsfreien Zement zusätzlich ein Verzögerer zur Einstellung der Abbindezeit zugegeben. Als Verzögerer wird dort Aminformiat oder Aminacetat in Verbindung mit Kalk vorgeschlagen. In einem weiteren Patent AT 382859 B wird für die Herstellung von Spritzbeton ein gips- bzw. anhydritfreier Zement mit einer spezifischen Oberfläche von 2.000 bis 8.000 cm²/g vorgeschlagen. Das Patent beinhaltet sowohl die Herstellung des Zementes als auch ein Gemisch aus Zement und getrocknetem Zuschlagstoff. Das wesentliche dort ist, daß der Zement aufgrund des Fehlens von Calciumsulfat sehr schnell erhärtet, so daß eine zusätzliche Zugabe von einem Erstarrungsbeschleuniger nicht notwendig ist. Der wesentliche Nachteil besteht darin, daß die Zuschläge keine Eigenfeuchte (ca. 3-5 % - durch die Lagerung oder Gewinnung aus der Lagerstätte) enthalten dürfen und so nur getrocknetes Zuschlagmaterial verwendet werden kann. Dies kommt im genannten Patent auch zum Ausdruck, da die Verwendung ausschließlich auf Trockenspritzbeton beschränkt ist. Weiter zeigt der verwendete Spritzbeton mit diesem Bindemittel bei Sulfatangriff sekundäre Reaktionsumwandlungen von ursprünglich gebildetem Calciumaluminathydrat (C₄AH₆) zum wasserhaltigen Calciumaluminat (Ettringit). Diese Phase zeigt eine sehr starke Volumenvergrößerung, so daß eine sehr starke Treibwirkung gegeben ist.

Das Bindemittel wird in einer speziellen Einrichtung, eventuell unter Zugabe von herkömmlich angewendetem Spritzbetonzusatzmittel, vorgemischt, bevor es in die Fördereinrichtungen für das Trocken- und Naßspritzverfahren eingebracht wird.

Das Bindemittel weist die Zusammensetzung nach Anspruch 1 auf. Es kann wie folgt zusammengesetzt sein:
a) Zement-Klinker mit einem Gehalt:
   C₃S: 40 bis 65 %,
   C₂S: 20 bis 45 %,
   C₃A: 22 bis 1 %,
   C₄AF: 0 bis 12 %,
b) sulfatische Komponente: Zur Einstellung des Erstarrungsverhaltens während der Zeit der Vormischung,
c) wasserbindende Komponente: Diese hat die Aufgabe, den Wassergehalt des Zuschlages während der Mischphase an diese Substanz zu binden, damit keine chemische Reaktion der Klinkerphase auftritt,
d) rückprallmindernde Komponente und Fließmittel.

Die dabei verwendeten Mengenverhältnisse der Komponente a) liegen zwischen 60 und 95 % Klinker obiger Zusammensetzung, der Komponente b) von > 0 bis 2,5 %, direkt zugegeben oder im Klinker beinhaltet, der Komponente c) von 0,3 bis 8 % und der Komponente d) von > 0 bis 10 %.

Die Komponente a) besteht vorzugsweise aus einem im Zementwerk herstellbaren Klinker, wobei die vom Normalen abweichenden Phasenanteile durch die Einstellung eines geänderten Kalk-Standards bzw. eines Tonerde-Moduls erreicht werden können. Die Komponente b) kann entweder Gips, Halbhydrat oder wasserfreies Calciumsulfat (Anhydrit), aber auch wasserfreies Aluminiumsulfat oder Magnesiumsulfat sein. Die wasserbindende Komponente aus leicht gebranntem CaO, wasserfreiem Al-Sulfat oder ähnlichen stark wasserbindenden Substanzen (z. B. Si-Stoffe) beträgt zwischen 0,3 und 8 %. Die Reaktion mit dem feuchten Zuschlag kann auch durch eine reaktionsverzögernde Substanz erreicht werden. Der Rückprallminderer kann aus amorphen Kieselsäurepulvern künstlicher oder natürlicher Entstehung, mit hoher spezifischer Oberfläche gebranntem bzw. geschäumtem Gesteinsglas-Material mit einem hohen SiO₂-Anteil (55%), einem SiO₂-angereicherten, sehr feinen Flugascheanteil oder Ton bzw. tonähnlichen Produkten sowie fein gemahlenem Kalksteinpulver bestehen. Dazu kann noch Fließmittel kommen, um die Dichtigkeit zu erhöhen.

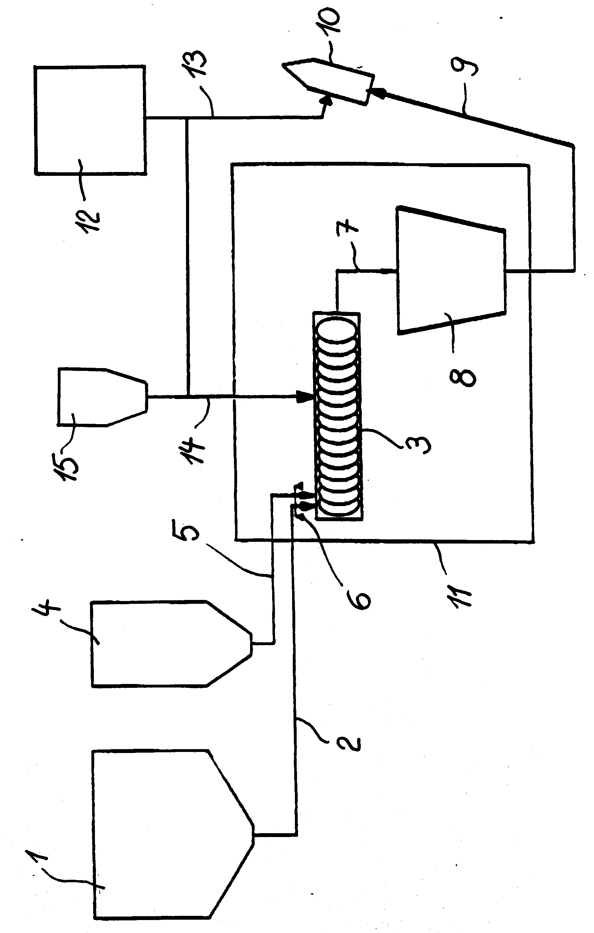

Das in der Erfindung angeführte Bindemittel zeigt rasches Ansteifverhalten (sowohl was den Erstarrungsbeginn als auch das -ende betrifft) und Frühfestigkeitsentwicklung, es weist somit geregeltes Erstarrungsverhalten auf. Dadurch unterscheidet es sich einerseits vom 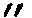 sulfatfreien, gemahlenen Klinker", zum anderen zeigt dieses Bindemittel wesentlich schnellere Erstarrungseigenschaften als herkömmlicher Zement. Durch die Kombination, insbesondere der Anteile b) und c) des vorliegenden Bindemittels, erreicht man, daß das Bindemittel mit einem feuchten Zuschlag während der Mischphase (Bild 1) fast keine Vorhydratation erfährt und dadurch keine technologisch negativen Einflüsse bekommt. Erst durch die Zugabe des Wassers an der Düse (Bild 1) wird die Hydratation sehr rasch in Gang gesetzt, so daß das Material direkt aufgetragen werden kann. Die Wahl des Sulfatträgers in der gewählten Art und Konzentration wirkt sich auf das notwendige rasche Erstarrungsverhalten des aufgetragenen Produktes aus, ohne daß negative technologische Eigenschaften wie bei den herkömmlichen Trocken- und Naßspritzverfahren in Verbindung mit Erstarrungsbeschleunigern zu finden sind. Der hergestellte Beton weist darüber hinaus eine hohe Dichte auf, hat sehr hohe Festigkeiten und ein geringes Auslaugverhalten. Die Mischung erfolgt über einen Schneckenmischer (Bild 1) oder einen Zwangsmischer, der der Spritzmaschine vorgeschaltet wird. Diese nachgeschalteten Spritzmaschinen können auf Naß - oder Trockenspritzverfahrenstechnik beruhen.

Im Text wurden folgende Abkürzungen benutzt:
C₃S = 3 CaO x SiO₂ (Alit)
C₂S = 2 CaO x SiO₂ (Belit)
C₃A = 3 CaO x Al₂O₃
C₄AF = 4 CaO x Al₂O₃ x Fe₂O₃

In dem Bild 1 ist schematisch eine erfindungsgemäß verwendbare Spritzvorrichtung wiedergegeben. Diese zeigt einen Vorratsbehälter für Sand 1 sowie eine Förderleitung 2 zum Mischaggregat 3 welches als Mischschnecke dargestellt ist, einen Vorratsbehälter 4 für den Spezialzement und die erfindungsgemäßen Zuschlagsstoffe nebst Förderleitung 5. Die Förderung in den Leitungen 2/5 wird über eine Dosiereinrichtung 6 geregelt. Von dem Mischaggregat 3 wird die Mischung über eine weitere Förderleitung 7 zu einer konventionellen Trockenspritzmaschine 8 und von dort über eine Leitung 9 zu einer Spritzdüse 10 geleitet. Dosiereinrichtung 6, Mischaggregat 3 und Spritzmaschine 8 sich in einer Abkapselung 11 zusammengefaßt. Die benötigte Wassermenge wird aus einem Vorratsbehälter 12 über eine Förderleitung 13 oder 14 entweder dem Mischaggregat 3 oder der Düse 10 zugeführt. Rückprallminderer und/oder Erstarrungsbeschleuniger können aus einem Vorratsbehälter 15 über die gleichen Leitungen 13/14 bei Bedarf zudosiert werden. Ein entscheidendes Merkmal der Vorrichtung ist die auf etwa 2-4 min. begrenzte Förderzeit von dem Mischaggregat 3 bis zur Spritzdüse 10.

### Beispiel

Bindemittel: Aus der Komponente a), bestehend aus 57 % C₃S, 23 % C₂S, 15% C₃A und 4 % C₄AF sowie der Komponente b), bestehend aus 70 % Gips und 30 % Halbhydrat sowie mit einem Anteil an Komponente c) von 2,4 % CaO + 0,5 % Aluminiumsulfat, wasserfrei, und letztlich mit einem Anteil an Komponente d) von 4,5 % Silicafume und 0,3 % Fließmittel wurde ein Bindemittel so hergestellt, daß die Komponente a) 91,3 %, die Komponente b) 1,0 %, die Komponente c) 2,9 % und die Komponente d) 4,8 % betrug.

Davon wurde eine Mischung über einen Schneckenmischer mit einer Zusammensetzung von 380 kg/m³ Bindemittel und 1.820 kg/m³ Zuschlag der Körnung 0/8 mm in einer abgestimmten Sieblinie vorgemengt und in einer Trockenmaschine (Aliva 260) aufgetragen. Die angegebenen Werte beziehen sich auf 1 m³ Fertigsubstanz, der verwendete Wasser/Bindemittel-Wert betrug etwa 0,38.

## Patentansprüche

1. Bindemittel, zum Herstellen von Spritzbeton, aus:
a) 60 bis 95 Gew.-% gemahlenem Zementklinker,
b) >0 bis 2,5 Gew.-% einer sulfatischen Komponente,
c) 0,3 bis 8,0 Gew.-% einer wasserbindenden Komponente,
d) > 0 bis 10,0 Gew.-% einer den Rückprall von Spritzbeton vermindernden Komponente.

2. Bindemittel nach Anspruch 1, bei dem
a) der Zementklinker 40 bis 65 Gew.-% C₃S, 20 bis 45 Gew.-% C₂S, 1 bis 22 Gew.-% C₃A und 0 bis 12 Gew.-% C₄AF enthält, und/oder
b) die sulfatische Komponete aus Anhydrit, Halbhydrat, Gips, wasserfreiem Aluminiumsulfat und/oder wasserfreiem Magnesiumsulfat besteht, und/oder
c) die wasserbindende Komponente aus gebranntem Calciumoxid, wasserfreiem Aluminiumsulfat und/oder einer Siliciumverbindung besteht, und/oder
d) die den Rückprall vermindernde Komponente aus amorphem Kieselsäurepulver künstlichen oder natürlichen Ursprungs, gebranntem oder geschäumtem Gesteinsglas-Material mit einem SiO₂-Anteil über 55 Gew.-%, feiner Flugasche, SiO₂-angereicherter Flugasche, Ton, tonähnlichen Produkten und/oder fein gemahlenem Kalksteinpulver besteht.

3. Bindemittel nach Anspruch 1, das zusätzlich ein Fließmittel enthält.

4. Verfahren zur Herstellung eines Spritzbetons, bei dem man in einer Mischvorrichtung ein Bindemittel nach einem der Ansprüche 1 bis 3 mit feuchten Zuschlagstoffen mischt und homogenisiert und das erhaltene Gemisch unmittelbar anschließend mit Hilfe einer Fördereinrichtung zu einer Spritzdüse fördert, aus welcher der Spritzbeton auf die zu behandelnde Fläche aufgetragen wird, wobei man das zum Abbinden und Erhärten erforderliche Wasser dem Gemisch nach der Mischvorrichtung, jedoch vor oder an der Spritzdüse zusetzt.

5. Verfahren nach Anspruch 4, bei dem das Gemisch aus Bindemittel und Zuschlagstoffen mittels einer Trockenspritzmaschine zu der Spritzdüse gefördert wird.

## Claims

1. A binder for preparing gunned concrete, from:
a) 60 to 95% by wt. of a ground cement clinker,
b) > 0 to 2,5% by wt. of a sulfate component,
c) 0,3 to 8,0 % by wt. of a water-binding component,
d) > 0 to 10,0% by wt. of a component reducing the rebound of gunned concrete.

2. The binder according to claim 1, wherein
a) the cement clinker contains 40 to 65% by wt. of C₃S, 20 to 45% by wt. of C₂S, 1 to 22% by wt. of C₃A and 0 to 12% by wt. C₄AF, and/or
b) the sulfate component consists of anhydrite, hemihydrate, gypsum, anhydrous aluminium sulfate and/or anhydrous magnesium sulfate, and/or
c) the water-binding component consists of burnt calcium oxide, anhydrous aluminium sulfate and/or a silicium compound, and/or
d) the component reducing the rebound consists of an amorphous powder of silicic acid of synthetic or natural origin, burnt or foamed natural glass material having a SiO₂ content of >55% by wt., fine flue ash, SiO₂-enriched flue ash, clay, clay-like products and/or finely ground limestone powder.

3. The binder according to claim 1, containing additionally a liquifying agent.

4. A method for preparing a gunned concrete, wherein a binder according to any of claims 1 to 3 is mixed with wet aggregates in a mixing apparatus and homogenized, and, immediately thereafter, the obtained mixture is conveyed to a spray nozzle, with the aid of a conveyor, from which the gunned concrete is applied to the surface to be treated, the water necessary for setting and hardening being added to the mixture behind the mixing apparatus but in front or at the spray nozzle.

5. The method according to claim 4, wherein the mixture of binder and aggregates is conveyed to the spray nozzle by means of a dry spraying apparatus.

## Revendications

1. Liant pour fabriquer du béton projeté, comprenant:
a) 60 à 95% en poids de clinker moulu,
b) > 0 jusqu'à 2,5% en poids d'un composant sulfaté,
c) 0,3 à 8,0% en poids d'un composant hydrophile,
e) > 0 jusqu'à 10,0% en poids d'un composant réduisant le rebondissement du béton projeté.

2. Liant selon la revendication 1, avec laquelle
a) le clinker contient 40 à 65% en poids de C₃S, 20 à 45% en poids de C₂S, 1 à 22% en poids de C₃A et 0 à 12% en poids de C₄AF, et/ou
b) le composant sulfaté est à base d'anhydrite, de semi-hydrate, de gypse, de sulfate d'aluminium anhydre et/ou de sulfate de magnésium anhydre, et/ou
c) le composant hydrophile est à base d'oxyde de calcium brûlé, de sulfate d'aluminium anhydre et/ou d'un composé de silicium, et/ou
d) le composant réduisant le rebondissement est à base de poudre de silice amorphe d'origine artificielle ou naturelle, de verre de roche brûlé ou moussé avec une fraction de SiO₂ supérieure à 55% en poids, de cendre volante fine, de cendre volante enrichie avec du SiO₂ d'argile, de produits identiques à de l'argile et/ou de poudre de calcaire finement moulue.

3. Liant selon la revendication 1, qui contient en supplément un fondant.

4. Procédé pour fabriquer un béton projeté, avec lequel on mélange et homogénéise dans un dispositif mélangeur un liant selon l'une quelconque des revendications 1 à 3 avec des agrégats humides et on transporte le mélange obtenu directement à l'aide d'un dispositif de transport vers une buse de projection, à partir de laquelle le béton projeté est appliqué sur la surface à traiter, opération pour laquelle on ajoute l'eau nécessaire pour la prise et le durcissement au mélange après le dispositif mélangeur, mais avant ou sur la buse de projection.

5. Procédé selon la revendication 4, avec lequel le mélange fait de liant et d'agrégats est transporté d'une machine de projection à sec vers la buse de projection.
